# EUROPÄISCHE PATENTANMELDUNG

(11) **EP 2 151 481 A1**
(43) Veröffentlichungstag der Anmeldung: **10.02.2010**
(21) Anmeldenummer: 09009425.1
(22) Anmeldetag: 21.07.2009
(51) Int. Cl.: C09D 1/00, C09D 5/08, C09D 7/12, C23C 22/34

(54) **Wässrige Lösung und Verfahren zur Beschichtung von metallischen Oberflächen sowie Verwendung von modifizierter Kieselsäure bzw. Konzentratzusammensetzung zur Bereitstellung einer wässrigen Beschichtungslösung**

(30) Priorität: 01.08.2008 DE 102008035876
(71) Anmelder: Chemische Werke Kluthe GmbH, 69115 Heidelberg (DE)
(72) Erfinder: Doms, Gabriele, 68167 Mannheim (DE); Distler, Tobias, 69214 Eppelheim (DE)
(74) Vertreter: Ullrich & Naumann

(57) **Zusammenfassung**

Eine wässrige Lösung zur Beschichtung von metallischen Oberflächen ist im Hinblick auf umweltschonende und robuste Eigenschaften bei leichter Anwendbarkeit und gutem Korrosionsschutz dadurch gekennzeichnet, dass die Lösung eine modifizierte Kieselsäure aufweist. Des Weiteren werden ein Verfahren zur Beschichtung von metallischen Oberflächen sowie eine Konzentratzusammensetzung bzw. die Verwendung modifizierter Kieselsäure zur Bereitstellung einer wässrigen Lösung zur Beschichtung von metallischen Oberflächen vorgeschlagen.

## Beschreibung

Die vorliegende Erfindung betrifft eine wässrige Lösung zur Beschichtung von metallischen Oberflächen sowie eine Konzentratzusammensetzung bzw. die Verwendung von modifizierter Kieselsäure zur Bereitstellung einer solchen wässrigen Lösung. Des Weiteren betrifft die Erfindung ein Verfahren zur Beschichtung von metallischen Oberflächen.

Ein bekanntes Verfahren zur Behandlung von metallischen Oberflächen vor einer Lackierung mit hohen Korrosionsschutzanforderungen, z.B. von Karosserien oder Karosserieteilen, ist die Phosphatierung auf Basis von Zink- und/oder Nickelund/oder Mangan-Phosphaten mit weiteren Zusatzstoffen. Auf Grund der ökologischen Risiken von Nickelverbindungen wird seit vielen Jahren eine Alternative zu dieser Art der Vorbehandlung gesucht.

Neben den Problemen mit den eingesetzten Schwermetallen hat das Verfahren der Phosphatierung weitere Nachteile. An erster Stelle sind hier der hohe Schlammanfall und die sich daraus bildenden Verkrustungen in der Anlage und in den peripheren Anbauten zu nennen. So wurde das Verfahren zwar über die Jahre immer weiter verfeinert, aber die grundlegenden Probleme sind geblieben.

Weiterhin ist beim bekannten Verfahren eine gemischte Fahrweise (Multimetalleignung) zwar gegeben, sie ist aber nicht in jeden Verhältnis umsetzbar. So ist mit einer Zinkphosphatierung eine Behandlung von Aluminiumoberflächen zu 100% Oberflächenanteil nicht möglich.

Der Einsatz von Silanen / Siloxanen in wässrigen Zusammensetzungen für korrosionsschützende Beschichtungen ist grundsätzlich bekannt. Neben den enthaltenen Lösemittel(n) sind diese Verfahren teilweise schwierig in der Anwendung. So kann es auf den metallischen Untergründen problematisch sein, die transparente Silanbeschichtung zu erkennen.

Die Haftungsverbesserung und auch der Korrosionsschutz solcher Silan-Beschichtungen sind oft sehr hoch, aber unter bestimmten Voraussetzungen kann es zu Unverträglichkeiten mit einer nachfolgenden organischen Beschichtung kommen. Gerade im Bereich der Elektrotauchlacke ist dies vermehrt aufgetreten. So sind hier weitere Chemikalien bzw. Verfahrensschritte notwendig. Die Ursache liegt in den Silanen bzw. Polysiloxanen selbst begründet. Je nach vorliegender Seitenkettenausbildung kann es leicht zu Unverträglichkeiten bei der organischen Beschichtung kommen, da solche Systeme nicht nachgespült werden (No-Rinse-Anwendungen).

Der vorliegenden Erfindung liegt daher die Aufgabe zugrunde, eine umweltschonende, robuste, korrosionsschützende und einfach aufbringbare Beschichtung von metallischen Oberflächen zu realisieren.

So soll eine wässrige Zusammensetzung vorgeschlagen werden, die eine hohe Umweltverträglichkeit aufweist. Außerdem soll eine hohe Korrosionsbeständigkeit gewährleistet werden, wie sie von der Zinkphosphatierung in der Automobilindustrie gefordert ist. Die Multimetallanwendungen, auch bei hohen Aluminiumanteilen an der metallischen Oberfläche, soll bzw. muss gegeben sein, da der Leichtmetallanteil an Automobilkarosserien ständig zunimmt. Daneben soll die bekanntermaßen schwierige Handhabung bzw. Verarbeitung der bekannten silanhaltigen wässrigen Lösungen deutlich vereinfacht werden.

Die obige Aufgabe ist in Bezug auf eine wässrige Lösung mit den Merkmalen des Patentanspruchs 1 gelöst. Danach ist eine erfindungsgemäße wässrige Lösung zur Beschichtung von metallischen Oberflächen **dadurch gekennzeichnet, dass** die Lösung eine modifizierte Kieselsäure aufweist.

Anspruch 11 gibt eine Konzentratzusammensetzung zur Bereitstellung einer erfindungsgemäßen wässrigen Lösung an.

In Bezug auf ein Verfahren zur Beschichtung von metallischen Oberflächen ist die Aufgabe mit den Merkmalen des Patentanspruchs 12 gelöst.

Schließlich wird mit den Merkmalen des Patentanspruchs 15 eine erfindungsgemäße Verwendung von modifizierter Kieselsäure zur Bereitstellung einer wässrigen Lösung zur Beschichtung von metallischen Oberflächen angegeben.

Vorteilhafte Ausgestaltungen des Erfindungsgedankens sind den jeweils nachgeordneten, abhängigen Patentansprüchen entnehmbar.

Es wurde jetzt gefunden, das durch den Einsatz von oberflächenmodifizierten Kieselsäuren, sogenannten "Silicasolen", eine deutlich leichtere Handhabung realisiert werden kann. Ein Vorteil liegt darin, dass diese Silicasole nicht wie die bekannten Silane/Silanole über mehrere Stunden hydrolisiert werden müssen. Sie sind vielmehr vorhydrolisiert und können direkt verwendet werden. Außerdem ergibt sich durch die Kieselsäure eine stark vergrößerte Oberfläche, welche mit dem Metallsubstrat reagieren kann. So ist an der Reaktion auf dem Metallsubstrat nicht nur das Silan/Silanol beteiligt. Vielmehr reagiert auch die Kieselsäure mit der Metalloberfläche. Zusätzlich vernetzen die reaktiven Gruppen der Silane/Silanole zu einem Netzwerk, und diese Gruppen können auch mit der Metalloberfläche reagieren.

In bevorzugter Weise weist die modifizierte Kieselsäure eine mit einem Silan modifizierte Kieselsäure auf. Dabei haben sich wasserbasierte Epoxy-Silane als besonders wirksam erwiesen.

Im Rahmen der vorliegenden Erfindung ist festgestellt worden, dass mit einem Glycidoxysilan modifizierte Kieselsäuren in überraschender Weise eine besonders vorteilhafte wässrige Lösung zur Beschichtung bereitstellen können.

Gemäß einer besonders bevorzugten Weiterbildung wird eine wässrige Lösung vorgeschlagen, welche eine mit Gamma-Glycidoxypropyltrimethoxysilan modifizierte Kieselsäure aufweist.

Derart modifizierte Kieselsäuren sind bspw. von der Firma Eka Chemicals unter dem Handelsnamen Bindzil® erhältlich. Bindzil® ist eine eingetragene Gemeinschaftsmarke der Firma Akzo Nobel Chemicals B.V..

In einer weiteren Ausgestaltung ist die in der wässrigen Lösung enthaltene Kieselsäure mit 3-Glycidoxypropytriethoxysilan und/oder mit Gamma-Aminopropyltriethoxysilan modifiziert.

Im Hinblick auf ein besonders gutes Beschichtungsergebnis ist bevorzugt, dass innerhalb der erfindungsgemäßen wässrigen Lösung die Konzentration der modifizierten Kieselsäure zwischen ca. 5% und ca. 15%, insbesondere zwischen ca. 7% und ca. 10%, beträgt.

Soll jedoch das Substrat nach der Behandlung mit der erfindungsgemäßen Lösung mit einer nachfolgenden organischen Beschichtung versehen werden, ist bevorzugt, dass die Konzentration der modifizierten Kieselsäure zwischen ca. 0,05% und ca. 5%, insbesondere zwischen ca. 0,2% und ca. 1%, beträgt.

Die erfindungsgemäße wässrige Lösung kann des Weiteren ein organisches Lösungsmittel aufweisen. Dabei kann es sich auch um eine Mischung verschiedener organischer Lösungsmittel handeln.

Die Aktivierung zu der bei der Beschichtung ablaufenden Reaktion läuft säureunterstützt ab. Aus diesem Grund sollte ein Konzentrat, welches das Silicasol enthält, nicht auch die Säurekomponente enthalten. Es sollte daher mit zwei getrennten Komponenten gearbeitet werden.

Die Behandlungslösung bzw. Anwendungslösung kann einen pH-Wert von 3,5 - 4,8 aufweisen.

Des Weiteren hat es sich als vorteilhaft erwiesen, dass die erfindungsgemäße Lösung zusätzlich einen oder mehrere der folgenden Bestandteile aufweist:
- eine oder mehrere Titan-, Hafnium-, Zirkonium-, Aluminium- und/oder Borhaltige Verbindung bzw. Verbindungen,
- ein Monomer, Oligomer, Polymer, Copolymer aus dem Bereich der Acrylate, Methacrylate oder Vinylalkohole, oder eine Mischung hiervon,
- ein Kation aus der Vanadium- und/oder der Mangangruppe, oder eine Mischung hiervon,
- eine den pH-Wert beeinflussende Substanz aus dem Bereich der organischen Säuren oder Laugen.

Dabei ist bevorzugt, dass der Gehalt der Titan-, Hafnium-, Zirkonium-, Aluminiumund/oder Borhaltigen Verbindung ca. 0,01% bis ca. 5% beträgt, wobei die Summation der entsprechenden Metalle zugrunde liegt.

In einer weiteren vorteilhaften Ausgestaltung der erfindungsgemäßen wässrigen Lösung weist diese mindestens ein Komplexfluorid ausgewählt aus Titan-, Hafnium-, Zirkonium-, Aluminium- und/oder Borverbindungen auf. Diese Komplexfluoride können in Form von Hexafluormetallsäuren der Lösung zugegeben werden.

Der Gehalt an Komplexfluorid(en) kann von ca. 0,01% bis ca. 10% betragen, wobei die Summation der entsprechenden Metallkomplexfluoride (MeF₆) zugrunde liegt.

Daneben hat sich überraschender Weise gezeigt, dass der Korrosionsschutz durch den Einsatz eines zweiwertigen Kations aus der Vanadiumgruppe oder der Mangangruppe in der wässrigen Lösung verbesserbar ist. Alternativ oder zusätzlich können zu diesem Zweck auch Kationen von Niobium, Tantal oder Magnesium zugegeben werden. Als besonders vorteilhaft haben sich Mangan(II)- und/oder Vanadium(VI)-Salze erwiesen.

Der Gehalt an Kationen kann von ca. 0,01% bis ca. 10% betragen, wobei die Summation der entsprechenden Verbindungen zugrunde liegt.

Schließlich ist im Rahmen der vorliegenden Erfindung festgestellt worden, dass es vorteilhaft ist, eingetragene Metallionen aus vorgelagerten Spülprozessen und/oder Metallionen, welche aus dem Substrat herausgelöst werden, in der Behandlungslösung zu stabilisieren. Dies betrifft insbesondere Magnesium- und/oder Calciumionen. Hierzu kann der erfindungsgemäßen wässrigen Lösung ein Sequestrierungsund/oder Komplexierungsmittel zugesetzt werden. Dabei haben sich organische Substanzen aus der Stoffgruppe der Heptonate, Gluconate, hydrolysestabilen Phosphonate, Succinate oder Asparaginate, oder eine Mischung hiervon als besonders geeignet erwiesen.

Alternativ oder zusätzlich können auch klassische Komplexbildner wie 1-Methylglycin-N-diessigsäure-Na₃ Salz oder Diethylentriaminpentaessigsäure-Na₅ Salz, oder eine Mischung hiervon zum Einsatz kommen.

Die Konzentration der genannten Sequestrierungs- und/oder Komplexierungsmittel in der Behandlungslösung kann dabei vorteilhafterweise zwischen ca. 0,01- ca. 0,05 g/l betragen. In einer Konzentratlösung kann der Anteil dementsprechend bei ca. 0,01- ca. 0,5% liegen.

Schließlich ist dem Fachmann bekannt, dass vorstehend beschriebene wässrige Lösungen bzw. Bäder oftmals zunächst in Form von Konzentratzusammensetzungen vorliegen und vor Ort durch Zugabe von Wasser und ggf. weiteren Inhaltsstoffen in die gebrauchsfertige wässrige Lösung überführt werden. Entsprechende Konzentratzusammensetzungen zur Herstellung einer erfindungsgemäßen wässrigen Lösung sind daher ausdrücklich vom Erfindungsgedanken umfasst. Wie bereits ausgeführt, kann eine solche Konzentratzusammensetzung aus zwei oder mehreren Komponenten bestehen.

Das erfindungsgemäße Verfahren zur Beschichtung von metallischen Oberflächen ist **dadurch gekennzeichnet, dass** die zu beschichtende Oberfläche mit einer erfindungsgemäßen wässrigen Beschichtungslösung behandelt wird. In Bezug auf die durch das erfindungsgemäße Verfahren gegenüber dem Stand der Technik erreichten Vorteile wird dabei auf die Ausführungen zu der erfindungsgemäßen wässrigen Lösung verwiesen. Des Weiteren ergeben sich vorteilhafte Ausgestaltungen und Weiterbildungen des erfindungsgemäßen Verfahrens zunächst aus den beschriebenen Ausführungsformen der erfindungsgemäßen wässrigen Lösung. Auf die diesbezüglichen Ausführungen wird ebenfalls vollumfänglich verwiesen.

In einer besonders bevorzugten Weiterbildung des erfindungsgemäßen Verfahrens zur Beschichtung von metallischen Oberflächen wird die Oberfläche nach der Behandlung mit der wässrigen Beschichtungslösung nicht mit einem Spülfluid nachgespült, sondern trocknet vollständig auf.

Alternativ erlaubt das erfindungsgemäße Verfahren, die Oberfläche nach der Behandlung mit der wässrigen Beschichtungslösung ohne Trockenschritt mit einem Nasslack, insbesondere einem Elektrotauchlack, zu versehen. Dazu wird die Oberfläche nach der Behandlung ein- oder mehrfach mit einem Spülfluid gespült und danach direkt lackiert.

Die erfindungsgemäße wässrige Beschichtungslösung bzw. das erfindungsgemäße Verfahren eignet sich für eine Vielzahl von im gewerblichen Bereich zu behandelnder Oberflächen, bspw. metallische Oberflächen in der Automobilindustrie, von Schienenfahrzeugen, in der Luft-, Raumfahrt- und Elektroindustrie, im Apparate- und Maschinenbau und in der Bau- und Möbelindustrie. Allgemein lassen sich beliebige metallische Oberflächen behandeln, welche mit einem Korrosionsschutz versehen und/oder für eine spätere organische oder nicht organische Beschichtung vorbereitet werden sollen.

Im Rahmen der vorliegenden Erfindung wird des Weiteren die Verwendung von modifizierter Kieselsäure zur Bereitstellung einer wässrigen Lösung zur Beschichtung von metallischen Oberflächen vorgeschlagen. In Bezug auf erfindungsgemäße Vorteile und vorteilhafte Ausgestaltungen der Verwendung modifizierter Kieselsäure wird ausdrücklich Bezug genommen auf die im Hinblick auf die erfindungsgemäße wässrige Lösung und das erfindungsgemäße Verfahren beschriebenen Vorteile und vorteilhaften Ausführungsformen.

Durch den Einsatz der neuen Zusammensetzung ergeben sich u.a. Vorteile im Hinblick auf den Ablauf der Vorbehandlung. So werden in der Prozesskette weniger Behandlungszonen benötigt. Somit hat diese neue Vorbehandlung auch Auswirkungen auf den zukünftigen Raumbedarf von Vorbehandlungsanlagen. Außerdem muss die Aktivzone (Konversionsbehandlung) nicht beheizt werden, somit ist auch eine deutliche Energieeinsparung möglich. Daneben wird kein Phosphatschlamm gebildet, der zudem noch Schwermetallionen enthält und dadurch die Entsorgung verteuert.

Der direkte Vergleich einer besonders vorteilhaften Ausführungsform des erfindungsgemäßen Verfahrens zur Beschichtung von metallischen Oberflächen mit einer Zinkphosphatierung gemäß Stand der Technik zeigt dies in Tabelle 1 deutlich auf:

**Tabelle 1: Vergleich eines herkömmlichen Beschichtungsverfahrens (Zinkphosphatierung) und eines bevorzugten erfindungsgemäßen Verfahrens**

| Prozess-Schritt | Zinkphosphatierung (Stand der Technik) | neuartige Beschichtung |
|---|---|---|
| Alkalische Entfettung (evtl. mehrstufig) | Erwärmt (55 - 65°C) | Erwärmt (55 - 65°C) |
| Spülen 1 | Betriebswasser | Betriebswasser |
| Spülen 2 | Betriebswasser | VE-Wasser |
| Aktivierung | Ti- oder Zn-Phosphate | (entfällt) |
| Konversionsbehandlung | Phosphatieren, erwärmt (45- 55°C) | organische Beschichtung (keine Erwärmung) |
| Spülen 3 | Stadtwasser | VE-Wasser (optional) |
| Spülen 4 | VE-Wasser | VE-Wasser (optional) |
| Passivierung | Optional | (entfällt) |
| Spülen 5 | VE-Wasser | (entfällt) |

### Beispiele

Im Rahmen einer Versuchsreihe sind Beschichtungsversuche mit der neuartigen Beschichtungslösung durchgeführt worden, wobei insgesamt 11 unterschiedliche Zusammensetzungen verwendet worden sind.

In einer ersten Versuchsreihe sind mit den erfindungsgemäßen Badzusammensetzungen B1-B5 erzielbare Haftungsergebnisse für nachträglich auf entsprechend vorbehandelte Versuchsbleche aufgetragene Lackschichten (kathodischer Tauchlack KTL, Schichtdicke ca. 20 µm - ca. 30µm) auf verschiedenen Substraten mit entsprechenden Ergebnissen dreier bereits bekannter Beschichtungsverfahren verglichen worden.

Zur Herstellung der erfindungsgemäßen Behandlungslösungen wird das Silicasol in vollentsalztem Wasser unter Rühren suspendiert. Es werden die weiteren Zusatzstoffe der Behandlungslösung zugesetzt. Anschließend wird durch eine anorganische oder organische Säure der Arbeits-pH-Wert eingestellt. Die so hergestellte Lösung kann sofort verwendet werden und ist auch über mehrere Tage lagerstabil ohne Verlust der Funktionalität.

In Tabelle 2 sind zunächst die Badzusammensetzungen (Konzentrationsangaben in g/l) zusammengefasst. Des Weiteren sind die Haftungsergebnisse von KTL-Lack auf verschiedenen Substraten wiedergegeben. Die Haftungsergebnisse nach der Behandlung mit den erfindungsgemäßen Behandlungslösungen gemäß B1-B5 und der Vergleichsbeispiele VB1-VB3 gemäß Stand der Technik sind anhand eines Gitterschnitts gemäß DIN-EN-ISO 2409 ermittelt worden. Die in Tabelle 2 wiedergegebenen Ergebnisse zeigen, dass mit den verschiedenen erfindungsgemäßen Zusammensetzungen Haftungsergebnisse erzielt werden konnten, welche zumindest die Qualität der herkömmlichen Beschichtungsbäder aufweisen.

**Tabelle 2: Badzusammensetzungen einer ersten Versuchsreihe (in g/l) und erzielte Haftungsergebnisse einer nach der Vorbehandlung aufgetragenen KTL-Lackschicht**

| Beispiele/ | B1 | B2 | B3 | B4 | B5 | VB1 | VB2 | VB3 |
|---|---|---|---|---|---|---|---|---|
| modifiziertes Silicasol | 2 | 3 | 2 | 3 | 2 | - | - | - |
| Polyacrylat | - | - | - | - | - | 0,5 | - | - |
| H₂ZrF₆ als Zr | 0,2 | 0,2 | 0,2 | 0,2 | 0,2 | 0,2 | 0,15 | - |
| H₂TiF₆ als Ti | - | - | - | - | - | 0,1 | - | - |
| Mn | - | - | 0,05 | 0,05 | - | - | - | - |
| V | - | - | - | - | 0,05 | - | 0,05 | - |
| pH-Wert | 4,5 | 4,5 | 4,5 | 4,5 | 4,5 | 2,8 | 4,2 | 3 |
| | | | | | | | | |

| Gitterschnitt: | | | | | | | | |
|---|---|---|---|---|---|---|---|---|
| Stahl | 0 | 0 | - | 0 | - | - | 0 | 0 |
| Aluminium | 0 | 0 | - | 0 | - | 0 | 0 | 0 |
| verzinkter Stahl | 1 | 1 | 1 | 0 | 0-1 | - | 1-2 | 1 |

Danach sind anhand der erfindungsgemäßen Lösungen gemäß B1-B5 Korrosionsschutzversuche durchgeführt worden. Dazu sind wiederum entsprechend beschichtete Versuchsbleche mit einem Lacküberzug versehen worden. Danach ist jeweils die Unterwanderung nach einem Korrosionsschutztest gemäß VDA 621-415 und nach Salzsprühtests gemäß DIN-EN-ISO 9227 (neutraler Salzsprühtest: SST, essigsaurer Salzsprühtest: ESST) bestimmt worden.

Für die Gitterschnitt- und Korrosionsschutzversuche wurden jeweils Bleche mit einem wässrigen alkalischen Reiniger gereinigt und über eine Brauchwasserspüle und eine VE-Wasserspüle konditioniert. Die so vorbereiteten Bleche wurden mit der Behandlungslösung in Kontakt gebracht (Raumtemperatur, 2 min.).

Danach kann die aufgebrachte Vorbehandlungslösung getrocknet werden, oder aber direkt zur Beschichtung (ETL, Nasslack) gehen. Verwendet wurden Stahlbleche (kaltgewalzt), Aluminiumbleche (AIMgSi 0,7) sowie elektrolytisch verzinkter Stahlbleche. Bei der Elektrotauchlackierung handelte es sich um ein in der Automobilindustrie übliches KTL-System (kathodischer Tauchlack). Die Schichtdicke der Lackierung betrug bei allen Blechen von ca. 20 µm - ca. 30 µm Trockenfilmdicke und entspricht damit einem Dünnschicht-KTL-System.

Bei den Korrosionsschutzversuchen werden die auf die entsprechend vorbehandelten Bleche aufgebrachten dünnen KTL-Lackschichten gezielt eingeritzt und danach der entsprechenden Belastung gemäß Korrosionsschutztest ausgesetzt. DIN EN ISO 7253 regelt dabei die Vorbereitung der Prüfbleche vor den jeweiligen Tests.

Alle Ritze müssen mindestens 25 mm voneinander und von jeder Kante der Probeplatte entfernt sein. Es können mehrere Ritze angebracht werden. Diese müssen aber parallel zur längsten Seite der Probeplatte verlaufen. Das Ritzgerät muss eine harte Spitze besitzen und eine breite von 0,3 - 1 mm aufweisen. Üblicherweise werden Ritzgeräte mit 0,5 mm breite verwendet. Die Verletzung durch den Ritz muss bis auf das metallische Substrat gehen.

Die nach einer bestimmten Zeitdauer festgestellte Unterwanderung bzw. Delamination des Lacks ist ein Anhaltspunkt für den mit der Beschichtung erzielten Korrosionsschutz. Die Beurteilung von Beschichtungsschäden erfolgte dabei gemäß DIN EN ISO 4628-8. Nach Abschluss der Tests werden die Prüfbleche mit klarem Wasser abgespült und getrocknet. Die Prüfbleche werden dann auf Veränderungen untersucht und die lose Beschichtung entfernt. An mindestens sechs gleichmäßig über den Ritz verteilte Stellen wird die Unterwanderung (Delamination) bestimmt.

Dabei wird Grad der Delamination in mm bestimmt nach d = (d1-w)/2, wobei d1 den Bereich der Enthaftung in mm und w die Breite der ursprünglichen Ritzspur in mm wiedergibt.

Bei diesen Versuchen (Tabelle 3) zeigte sich, dass mit der erfindungsgemäßen Beschichtungslösung i.A. eine deutlich geringere Unterwanderung erzielbar war als mit den bekannten Vorbehandlungsbädern:

**Tabelle 3: Im Rahmen der ersten Versuchsreihe erhaltene Korrosionsschutzergebnisse**

| Beispiele/ | B1 | B2 | B3 | B4 | B5 | VB1 | VB2 | VB3 |
|---|---|---|---|---|---|---|---|---|
| Delamination in mm (nach 10 Zyklen VDA-Test): | | | | | | | | |
| Stahl | 2 | 1,8 | 1 | 1 | 1,5 | - | 3 | 1 |
| Verzinkter Stahl | 2,5 | 2,5 | 2 | 1,5 | 2 | - | 3,5 | 1,5 |
| | | | | | | | | |

| Delamination in mm (nach 1008 h SST) | | | | | | | | |
|---|---|---|---|---|---|---|---|---|
| Stahl | 1,5 | 1,0 | <1 | <1 | 1,0 | - | 2,5 | <1 |
| Verzinkter Stahl | 1,8 | 1,8 | 1,5 | 1,5 | 1,5 | - | 3,5 | 1,5 |
| | | | | | | | | |

| Delamination in mm (nach 1008 h ESST) | | | | | | | | |
|---|---|---|---|---|---|---|---|---|
| Aluminium | | 0,1 | 0,15 | 0,1 | 0,2 | 0,15 | 0,3 | 0,64 |

Legende zu Tabelle 2 und 3: B = Versuchsbeispiel mit neuartiger Vorbehandlung, VB = Vergleichsversuche mit bekannten Verfahren (1 = Aluminiumvorbehandlung; 2 = alternatives, schon in Anwendung befindliches Vorbehandlungsverfahren; 3 = nickelhaltige Zinkphosphatierung)

Für eine zweite Versuchsreihe sind weitere erfindungsgemäße wässrige Lösungen gemäß den Zusammensetzungen B6-B11 vorbereitet worden. Die jeweiligen Konzentrationsangaben in g/l sind Tabelle 4 entnehmbar:

**Tabelle 4: Badzusammensetzungen einer zweiten Versuchsreihe (in g/l)**

| Beispiel | B6 | B7 | B8 | B9 | B10 | B11 |
|---|---|---|---|---|---|---|
| Modifiziertes Silicasol | 3 | 3 | 3 | 3 | 3 | 3 |
| Polyacrylat | - | - | - | - | - | - |
| H₂ZrF₆ als Zr | 0,02 | 0,02 | 0,04 | 0,04 | 0,04 | 0,04 |
| H₂TiF₆ als Ti | - | - | - | - | - | - |
| Mn | 0,02 | 0,02 | 0,04 | 0,04 | 0,04 | 0,04 |
| V | - | - | - | - | - | - |
| pH-Wert | 3,8 | 4,2 | 3,8 | 4,2 | 3,8 | 4,2 |

Im Folgenden wurden weitere Versuchsbleche mit den wässrigen Lösungen gemäß B6-B11 behandelt und danach mit einer Dünnschicht-Kathodischen-Tauchlackierung (KTL) mit einer Schichtdicke von ca. 20 µm - ca. 30µm versehen, wie sie bspw. bei der Automobillackierung üblich ist. Danach wurde ein Konstantklima-Test nach DIN-EN-ISO 6270-2 durchgeführt, um die Beständigkeit der aufgetragenen Lackschicht gegen Feuchtigkeit zu ermitteln. Dazu wurde eine erste Charge von Blechen nach 504 h (21 Tagen) und eine zweite Charge von Blechen nach 1008 h (42 Tagen) aus dem Versuch genommen, und danach jeweils mit einem Gitterschnitt nach DIN-EN-ISO 2409 die Haftung der Lackschicht auf dem Substrat ermittelt. Die erzielten Ergebnisse sind Tabelle 5 zu entnehmen:

**Tabelle 5: Gemäß Gitterschnitt GT (vor Belastung/nach Belastung) erzielte Haftungsergebnisse einer KTL-Beschichtung auf erfindungsgemäß vorbehandelten Substraten nach Konstantklima-Test mit einer Dauer von 21 bzw. 42 Tagen**

| Beispiele | B6 | B7 | B8 | B9 | B10 | B11 |
|---|---|---|---|---|---|---|
| nach 504 h: | | | | | | |
| Stahl | 0/0 | 0/0 | 0/0 | 0/0 | 0/0 | 0/0 |
| Verzinkter Stahl | 0/4 | 0/3 | 0/2 | 0/1 | 0/1 | 0/2 |
| Aluminium | 0/0 | 0/0 | 0/0 | 0/0 | 0/0 | 0/0 |
| | | | | | | |

| nach 1008 h: | | | | | | |
|---|---|---|---|---|---|---|
| Stahl | 0/0 | 0/0 | 0/0 | 0/0 | 0/0 | 0/1 |
| Verzinkter Stahl | 0/3 | 0/3 | 0/2 | 0/1 | 0/2 | 0/3 |
| Aluminium | 0/0 | 0/0 | 0/0 | 0/0 | 0/0 | 0/0 |

Die mit der neuartigen Beschichtung erzielten Ergebnisse zeigen, dass bei Aluminium keinerlei Verschlechterung der Haftung der Lackschicht durch den Konstantklima-Test festgestellt werden konnte. Bei dem Substrat Stahl musste nur beim Beschichtungsbad gemäß B11 und nach einer Versuchsdauer von 42 Tagen ein Wert von 1 zugeordnet werden.

Auch für verzinkten Stahl liegen die beobachteten GT-Werte im niedrigen und mittleren Bereich. Im Ergebnis sind mit den Vorbehandlungsbädern B6-B11 hervorragende Haftungsergebnisse mit einer nachfolgenden KTL-Beschichtung erzielt worden.

Zuletzt sind mit weiteren mit Bädern gemäß B6-B11 vorbehandelten Versuchsblechen Korrosionsschutzuntersuchungen durchgeführt worden. Dazu ist die Delamination einer Lackschicht auf den Substraten Stahl, verzinkter Stahl und Aluminium nach der Durchführung von 10 Zyklen des Korrosionsschutztests gemäß VDA 621-415 untersucht worden. Des Weiteren ist die Delamination einer Pulverlackbeschichtung auf Stahl nach 1008 h (42 Tagen) eines neutralen Salzsprühtests (SST) gemäß DIN-EN-ISO 9227 und die Delamination einer Pulverlackbeschichtung auf Aluminium nach derselben Zeitdauer eines essigsauren Salzsprühtests (ESST) gemäß DIN-EN-ISO 9227 bestimmt worden. Diese Ergebnisse sind Tabelle 6 zu entnehmen:

**Tabelle 6: Festgestellte Delamination nach Korrosionsschutzuntersuchungen an mit erfindungsgemäßen Badzusammensetzungen B6-B11 vorbehandelten und lackierten Substraten**

| Beispiel | B6 | B7 | B8 | B9 | B10 | B11 |
|---|---|---|---|---|---|---|
| Delamination in mm (nach 10 Zyklen VDA-Test, KTL): | | | | | | |
| Stahl | 2,8 | 2,8 | 2,5 | 2,4 | 2,0 | 2,0 |
| Verzinkter Stahl | 3,0 | 3,5 | 2,5 | 2,7 | 2,2 | 2,0 |
| Aluminium | 0,1 | 0,1 | 0,15 | 0,1 | 0,1 | 0,1 |
| | | | | | | |

| Delamination in mm (nach 1008 h SST, Pulverlack): | | | | | | |
|---|---|---|---|---|---|---|
| Stahl | 1,8 | 1,9 | 1,0 | 1,0 | 0,6 | 0,6 |
| | | | | | | |

| Delamination in mm (nach 1008 h ESST, Pulverlack): | | | | | | |
|---|---|---|---|---|---|---|
| Aluminium | 0,1 | 0,1 | 0,1 | 0,1 | 0,1 | 0,1 |

Mit Aluminium als Substrat wurden erstaunlich niedrige Delaminationswerte von 0,1-0,15 mm erzielt (VDA und ESST). Bei Stahl lagen die beobachteten Werte zwischen 0,6-1,9 (SST) bzw. bei 2,0-2,8 (VDA). Für verzinkten Stahl wurden Delaminationswerte zwischen 2,0-3,5 beobachtet (VDA). Im Ergebnis war der bei den erfindungsgemäß vorbehandelten Versuchblechen erzielte Korrosionsschutz von sehr guter Qualität und die erzielten Ergebnisse lagen mindestens im Bereich der mit herkömmlichen Vorbeschichtungen erzielbaren Werte.

Abschließend sei betont, dass die vorstehend erläuterten Beispiele die erfindungsgemäße Lehre erörtern, diese jedoch nicht auf die Beispiele einschränken.

## Patentansprüche

1. Wässrige Lösung zur Beschichtung von metallischen Oberflächen,
**dadurch gekennzeichnet, dass** die Lösung eine modifizierte Kieselsäure aufweist.

2. Wässrige Lösung nach Anspruch 1, **dadurch gekennzeichnet, dass** die modifizierte Kieselsäure eine oberflächenmodifizierte Kieselsäure und/oder Silicasol und/oder eine mit einem Silan modifizierte Kieselsäure und/oder wasserbasiertes Epoxy-Silan auf modifizierter kolloidaler Kieselsäure aufweist.

3. Wässrige Lösung Anspruch 1 oder 2, **dadurch gekennzeichnet, dass** die modifizierte Kieselsäure eine mit einem Glycidoxysilan, insbesondere mit Gamma-Glycidoxypropyltrimethoxysilan und/oder mit 3-Glycidoxypropyltriethoxysilan und/oder mit Gamma-Aminopropyltriethoxysilan modifizierte Kieselsäure aufweist.

4. Wässrige Lösung nach einem der Ansprüche 1 bis 3, **dadurch gekennzeichnet, dass** die Konzentration der modifizierten Kieselsäure zwischen ca. 5% und ca. 15%, insbesondere zwischen ca. 7% und ca. 10%, beträgt.

5. Wässrige Lösung nach einem der Ansprüche 1 bis 4, **dadurch gekennzeichnet, dass** die Konzentration der modifizierten Kieselsäure zur Vorbereitung einer nachfolgenden organischen Beschichtung zwischen ca. 0,05% und ca. 5%, insbesondere zwischen ca. 0,2% und ca. 1 %, beträgt.

6. Wässrige Lösung nach einem der Ansprüche 1 bis 5, **dadurch gekennzeichnet, dass** die Lösung ein organisches Lösungsmittel aufweist.

7. Wässrige Lösung nach einem der Ansprüche 1 bis 6, **dadurch gekennzeichnet, dass** die Lösung einen oder mehrere der Bestandteile a) bis d) aufweist:
a) eine oder mehrere Titan-, Hafnium-, Zirkonium-, Aluminium- und/oder Borhaltige Verbindung bzw. Verbindungen,
b) ein Monomer, Oligomer, Polymer, Copolymer aus dem Bereich der Acrylate, Methacrylate oder Vinylalkohole, oder eine Mischung hiervon,
c) ein Kation aus der Vanadium- und/oder der Mangangruppe, oder eine Mischung hiervon,
d) eine den pH-Wert beeinflussende Substanz aus dem Bereich der organischen Säuren oder Laugen.

8. Wässrige Lösung nach Anspruch 7, **dadurch gekennzeichnet, dass** der Gehalt des Bestandteils gemäß a) ca. 0,01% bis ca. 5% beträgt, wobei die Summation der entsprechenden Metalle zugrunde liegt.

9. Wässrige Lösung nach einem der Ansprüche 1 bis 8, **dadurch gekennzeichnet, dass** die Lösung mindestens ein Komplexfluorid ausgewählt aus Titan-, Hafnium-, Zirkonium-, Aluminium- und Borverbindungen aufweist, insbesondere wobei der Gehalt an Komplexfluorid(en) von ca. 0,01% bis ca. 10% beträgt, wobei die Summation der entsprechenden Metallkomplexfluoride (MeF₆) zugrunde liegt.

10. Wässrige Lösung nach einem der Ansprüche 1 bis 9, **dadurch gekennzeichnet, dass** die Lösung mindestens ein Kation ausgewählt aus den Kationen von Vanadium, Niobium, Tantal, Mangan, und Magnesium enthält, insbesondere wobei der Gehalt an Kationen von ca. 0,01% bis ca. 10% beträgt, wobei die Summation der entsprechenden Verbindungen zugrunde liegt.

11. Konzentratzusammensetzung zur Bereitstellung einer wässrigen Lösung nach einem der Ansprüche 1 bis 10, insbesondere durch die Zugabe von - ggf. vollentsalztem - Wasser.

12. Verfahren zur Beschichtung von metallischen Oberflächen,
**dadurch gekennzeichnet, dass** die zu beschichtende Oberfläche mit einer wässrigen Beschichtungslösung nach einem der Ansprüche 1 bis 10 behandelt wird.

13. Verfahren nach Anspruch 12, **dadurch gekennzeichnet, dass** die Oberfläche nach der Behandlung mit der wässrigen Beschichtungslösung nicht mit einem Spülfluid nachgespült wird und vollständig auftrocknet.

14. Verfahren nach Anspruch 12, **dadurch gekennzeichnet, dass** die Oberfläche nach der Behandlung mit der wässrigen Beschichtungslösung ein- oder mehrfach mit einem Spülfluid gespült wird und ggf. darauf folgend ohne Trocknungsschritt mit einem Nasslack, insbesondere einem Elektrotauchlack, versehen wird.

15. Verwendung von modifizierter Kieselsäure zur Bereitstellung einer wässrigen Lösung zur Beschichtung von metallischen Oberflächen.
